# EUROPEAN PATENT SPECIFICATION

(11) **EP 0 466 467 B1**
(45) Date of publication and mention of the grant of the patent: **06.11.1996**
(21) Application number: 91306238.6
(22) Date of filing: 09.07.1991
(51) Int. Cl.: G06F 13/14, H04M 3/36

(54) **A method of processing access service requests in data processing systems, such as telephone exchanges, and a distributed system applying said method**
Verfahren zur Verarbeitung von Zugriffsdienstanforderungen in Datenverarbeitungssystemen, zum Beispiel in Fernsprechvermittlungsanlagen, und ein dieses Verfahren verwendendes verteiltes System
Méthode de traitement des demandes d'accès pour le service dans des systèmes de traitement de données, comme des centraux téléphoniques et un système distribué d'application de ladite méthode

(30) Priority: 10.07.1990 FI 903488
(43) Date of publication of application: 15.01.1992
(73) Proprietor: NOKIA TELECOMMUNICATIONS OY, 02601 Espoo (FI)
(72) Inventor: Lehtinen, Pekka, SF-04440 Järvenpää (FI)
(74) Representative: Howden, Christopher Andrew

(56) References cited:
- EP-A- 0 263 551
- US-A- 4 682 282
- IBM TECHNICAL DISCLOSURE BULLETIN vol. 31, no. 12, May 1989, ARMONK,NY,US pages 271-272, 'PRIORITY SCHEDULING ALGORITHM'
- AT &T TECHNICAL JOURNAL N0. 2 PART 2 February 1985, NEW YORK, US pages 633 - 660; B.T.DOSHI: 'ANALYSIS OF CLOCKED SCHEDULES HIGH-PRIORITY TASKS'
- TELETRAFFIC ISSUES , ITC-11, September 1985, KYOTO, JAPAN ; C.H.Yim and H.L. Hartmann : "THROUGHPUT BEHAVIOR OF SWITCHING SYSTEMS UNDER HEAVY LOAD CONDITIONS" ; pages 744-751

## Description

The invention relates to a method of processing access service requests in data processing systems, such as telephone exchanges, in which method only a limited number of service requests are allowed for access service simultaneously, and the remaining service requests are placed in incoming order into a service request access queue to wait for service.

Generally, the invention relates to the control of overload on processors, programs or other processing units handling service requests, by restricting the number of access service requests coming therein-to. The present invention relates particularly to the restriction of call attempts in overload situations at digital telephone exchanges. In telephone exchanges, an attempt is made to maintain as high a throughput as possible at the level of the overall system and small delays in different parts of the system (for instance in the signalling units). The maintenance of a high throughput level means that call attempts are lost only if necessary. Long waiting times for the dialling tone are unpleasant to the customer and may result in the customer cancelling the call (on-hook) or taking some other action which leads to failure of later service and thereby to a decreased throughput level and performance. Certain recommended values for the waiting time for the dialling tone have been determined in the CCITT recommendations. Therefore, a control system (call acceptance control) is needed to restrict the incoming traffic to the telephone exchange and the response time of the telephone exchange. Nowadays, such an overload control mechanism must react to sudden overload peaks faster than heretofore, since the new systems have faster processors and a greater capacity than the earlier systems had.

In a known method, the access service requests (call attempts) are placed in a queue of the FIFO (first in-first out) type in incoming order to wait for service. When in an overload situation the queue is filled, no further access service requests are taken up in the queue. Since in this method an attempt is made to serve those who have waited the longest time, this results in long waiting times and a long average dialling tone delay in an overload situation. Also, some of the access service requests in the queue are lost, since the subscriber already shuts the line (on-hook) tired of the long wait.

In another method, a queue of the type LIFO (last in-first out) is formed wherein the last one to have joined the queue is served first. In a system of this kind, some of the service requests may also have to wait in the queue for a very long time without being rejected or served, and then for instance in the case of a telephone exchange the customer may himself decline the access service request. This also decreases the throughput level of the entire system.

IBM Technical Disclosure Bulletin, Vol. 31, No. 12, May 1989, Armonk, NY, US, pages 271-272, discloses a priority scheduling algorithm in which higher priority requests are serviced before lower priority requests which have been waiting for less than a predetermined time. Low priority requests which have waited beyond the predetermined time are serviced before new higher priority requests. The method disclosed does not reject any of the incoming requests even in an overload situation. This causes a very long average queuing and processing time for most requests in overload situations. High priority requests may also have to wait a long time because of the favouring of sufficiently aged lower priority requests.

AT&T Technical Journal, No. 2, part 2, Feb. 1985, NY, US, pages 622-660; B.T. Doshi: "Analysis of Clocked Schedules - High Priority Tasks", discloses a model of a clocked schedule which transfers tasks that have arrived at external queues to further internal queues. A processor serves the internal queues according to a priority scheme. The arriving tasks are transferred to the internal queues via gating mechanisms that decide when these transfers happen. There are three different gating mechanisms available. The first one transfers only the jobs that are scheduled in a given interval. In the second mechanism the processor starts with a first queue and moves then to a second queue if the corresponding transfer is scheduled. In the third gating mechanism, when the processor is serving an internal queue, the new arrivals to the corresponding external queue move immediately to the internal queue. If a time intervals ends when the processor is working on a high priority queue and overrun occurs, the remaining high priority work has then to be destroyed, re-scheduled or carried over. The arranging of incomplete work reduces the time available in the next intervals and because high priority tasks are very time critical, long delays often cause unsuccessful service.

The object of the present invention is to provide a method and a system wherein as high a throughput level as possible is achieved simultaneously as access response times not exceeding the set requirements are accomplished.

This is achieved with a method of the type set forth in the first paragraph, which is characterised according to the invention in that when a new access service request arrives in the queue of access service requests, one or more service requests which have waited the longest time in the access queue are rejected from the access queue, if their estimated total queueing and processing times assessed according to the calculated average processing time of service requests exceed a predetermined limit value.

In the invention, a processing time is measured for each access service request, said processing time being the time from the transfer of the access service request from the access queue of access service requests for processing in the central processing unit to the completion of the processing of said access service request. The average processing time calculated from the processing times is utilized together with the queueing time in the rejection of access service requests. This is effected in such a manner that when a new access service request arrives in the access queue, then those access service requests among the service requests having waited the longest time in the access queue whose combined queueing time and average processing time exceeds a predetermined limit value, such as a maximum allowable response time for the system, are rejected one at a time. In this way, one can achieve a load-controlled length of access queue, that is, an access window of adjustable length to the central processing unit. Thus the method of the invention may be termed the window access method.

By the method of the invention, a time out based rejection rule which is unprejudiced to the access service requests is automatically achieved, and on account of this rejection rule, for instance in telephone exchanges no dialling tone delays for the call attempts that would be longer than allowed by the CCITT (Consultative Committee of International Telephone and Telegraph) are created. If the offered traffic (number of call attempts per time unit) exceeds the processing capacity of the telephone exchange, the extra call attempts will be automatically rejected without any significant decrease in the quantity of switched traffic. In other words, the central processing unit can be exploited at 100% capacity even during persistent overload.

According to another aspect of the invention, there is provided a communication apparatus comprising a plurality of distributed peripheral processing units and at least one central processing unit serving them in common, each peripheral processing unit comprising an access service request buffer for storage of service requests intended for the central processing unit and awaiting transfer to the central processing unit, characterised in that each peripheral processing unit is arranged, when a new service request arrives, to place the new service request in the access service request buffer and to reject from the buffer one or more access service requests which have waited longest in the buffer, if the sum of the elapsed queuing time and the estimated processing time assessed according to the calculated average processing time of access service requests exceeds a predetermined limit value.

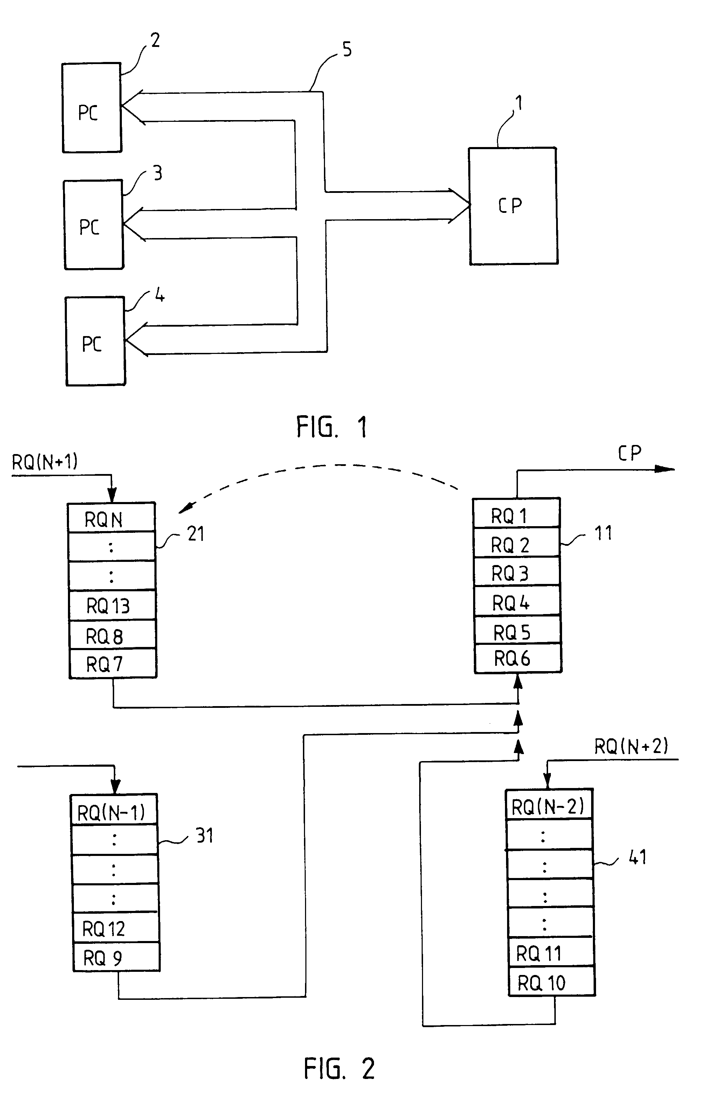

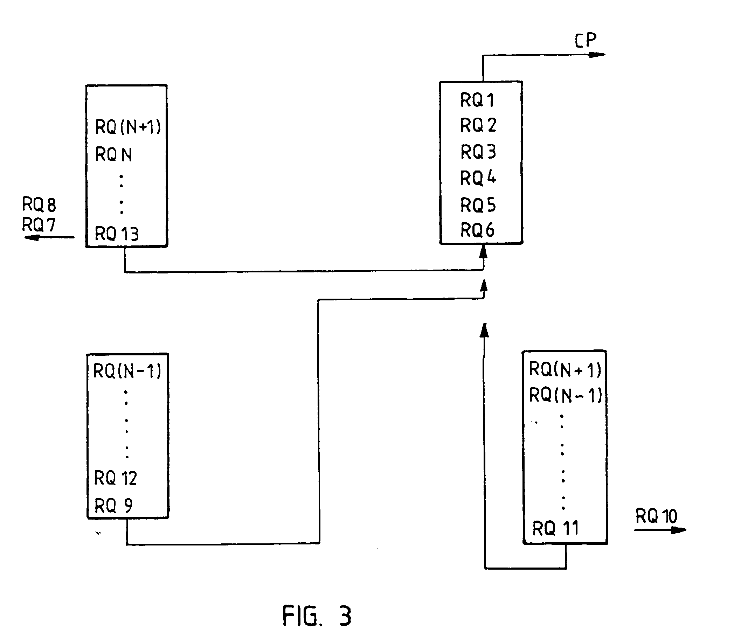

The invention will now be explained in further detail by means of embodiments with reference to the accompanying drawings wherein Figure 1 illustrates in block diagram form a distributed processing system according to the invention, and Figures 2 and 3 show the status of access queues according to the invention as applied in the system of Figure 1 at two successive instants of time.

The method of the invention can be applied in any connection in which control of the overload in access service request processing is desired. In that situation, the access service requests may be intended for a processor, a program, or other equivalent data or signal processing unit. However, the primary application of the invention is in telephone exchanges, in connection with which the invention will be explained in the following by way of example.

A digital telephone exchange may be either centralised or hierarchically distributed (decentralised) in its hardware configuration. Figure 1 shows a distributed digital telephone exchange comprising at least one central unit 1 (CP = central processor) attending to functions that require centralised intelligence, and a decentralised part comprised of signal control units, i.e. signalling units 2, 3 and 4 (PC = peripheral controller processors). In a telephone exchange having centralized hardware configuration, the units 1, 2, 3 and 4 have typically been realized as different programs in the same computer. In a star-like distributed telephone exchange, the signalling units 2, 3 and 4 and the central processing unit 1 communicate with one another via a message bus 5. The message bus is sometimes also termed a message switch (MS).

The invention relates to the controlling of the overload on the central processing unit 1. The purpose of the controlling method is to throttle incoming traffic to the central unit 1. Characteristic performance parameters of the system are the through-put level of the central unit 1, the average processing time in the central unit 1 and the average response time to a call attempt (for instance dialling tone delay).

In the case of Figure 1, the subscriber lines and the interexchange circuits have been connected to signalling units 2, 3 and 4. If a subscriber line is activated ( off-hook ), the signalling unit to which this line is connected detects the activation, generates a call attempt message, i.e. an access service request, and transmits it via the message bus 5 to the central unit 1, and establishes a state automaton. The central unit serves the access service request ( for instance enables a DTMF receiver ) and sends an acknowledgement message back to the same signalling unit. As was stated earlier, a state automaton is reserved for each new call attempt in the signalling unit 2, 3, 4, the state of which is updated in the course of the call setup successively from one step to another, depending on the subscriber line or the interexchange circuit or other corresponding signalling means. By a new call attempt is meant in this connection a signal or signalling message coming in from a subscriber interface or another telephone exchange or some other element of the telephone network to the exchange now discussed.

In accordance with the invention, each signalling unit 2, 3 and 4 has a respective buffer 21, 31 and 41 representing a queue of access service requests, into which buffer the signalling unit places the identification code of the state automaton as it receives a new call attempt and creates a state automaton corresponding thereto. The service access request buffers 21, 31 and 41 are FIFOT (first-in-first out-time out) type buffers wherein the earliest incoming access service request is also first taken out for acceptance or rejection.

The central unit 1 can simultaneously contain for processing a restricted number of access service requests per each signalling unit. This maximum number constitutes a kind of access window to the central unit, which access window can be adjusted if desired by changing said restricted number for instance depending on the load. In the following, it is contemplated for purposes of simplifying the description that a ticket has been assigned to each access service request being handled in the central unit. The tickets however do not correspond to resource units representing the capacity of the central unit. Each signalling unit has a predetermined, not necessarily similar or constant, number of tickets at its disposal. Then a new access service request is released from the access service request buffer located in the signalling unit 2, 3 or 4 to the central unit 1 for processing only after the processing of one access service request already being in the central unit has been completed and the ticket corresponding thereto becomes vacant and is returned to the signalling unit it belongs to. The return of a ticket may in practice be realized as an acknowledgement signal from the central unit 1 to the respective signalling unit. For this reason, the access service request queues 21, 31 and 41 located in the signalling units are called access queues from now on.

In other words, the main principle of the invention is to keep fresh call attempts waiting in access queues and to assign access tickets to them for access service at the same rate at which tickets are released and returned as a result of the completion of the access services. The number of tickets is such that the central unit 1 which is the bottleneck in the system has no idle time in an overload situation and that a larger number of tickets would no longer improve the total throughput level.

In accordance with the invention, when a new access service request arrives in the access queue, the sum of the measured queueing time of at least that access service request which has waited longest in the access queue and the calculated average processing time is checked, and the access service request is averted if said sum exceeds a predetermined limit value. Figure 2 shows codes RQ9-RQN of state automatons corresponding to different service requests in access queues 21, 31 and 41. A new call attempt or access service request RQ(N+2) is entering into the access queue 41. In that situation, the signalling unit 4 creates a new state automaton for this call attempt, and the code RQ(N+2) corresponding thereto is placed into the access queue behind the codes of the previous requests, and simultaneously, on account of the time out of the above-stated time criterion, the code RQ10 at the head of the queue 41 is removed, as is shown in Figure 3. The signalling unit 4 rejects the call attempt corresponding to this code. The rejection of the call attempt is effected in accordance with the pertinent signalling protocol; for instance to a subscriber's call attempt a busy tone is transmitted upon rejection, and in the case of common channel signalling, a suitable message is transmitted backward to the call attempt arriving on the connecting line, and subscriber release is awaited.

As often as a new call attempt comes in, and in connection with the creation of a state automaton corresponding thereto, the calculation of the queueing time for said access service request is initiated for instance by starting a timer or by adding a time stamp to it. The recording of time is continued for the entire queueing time. When a service request in the access queue is assigned a ticket and leaves the access queue to be processed in the central unit, recording of processing time is started, and this recording is terminated only after the processing of the access service for the call attempt has been completed and the corresponding ticket returned from the central unit to the signalling unit. An average processing time for the access service requests is then calculated from these measured processing times of the different access service requests, said average processing time being utilized in accordance with the invention in the rejection of call attempts or access service requests in the queue. Several access service requests fulfilling the rejection condition may be discarded simultaneously from the access queue, in which case the number of access service requests in the service request queue changes dynamically in dependence on the average processing time. For instance in Figure 2, a new call attempt RQ(N+1) is coming into the access queue 21. In queue 21, there are two service requests RQ7 and RQ8 for which the access response time will become too long, assessed on the basis of the average processing time. For this reason, both access service requests RQ7 and RQ8 are discarded from access queue 21 in accordance with Figure 3. Thus the access queue 21 shortens by one place. The release rate of tickets from the central unit 1 will slow down when the load on this unit increases. Therefore, changes in the load state caused by other traffic load (for instance disconnection of calls) in the central unit are also reflected in the signalling units 2, 3 and 4 as increase in the waiting times for new call attempts and rejection of overdelayed call attempts. Thus in accordance with the invention, a kind of automatic feedback has been achieved. On the other hand, the more frequently fresh call attempts arrive, the higher the rejection rate is automatically without any need to schedule the rejection procedure. On the other hand, in the distributed system of Figure 1, the queueing system according to the invention which has been realized in the signalling units does not limit the degree of utilization of the processor of the central unit 1. Thus one does not have to cut back the degree of utilization of the central unit 1, which constitutes the bottleneck unit in the system, below 100% on account of the overload control system.

Even though the access queues 21, 31 and 41 need not in principle have any maximum length in the invention, yet in practice they have a finite length. If this finite length of the access queue 21, 31 or 41 is reached in an extreme load situation, that is, all queueing seats are in use, the time out criterion of the invention cannot be applied, but when a new access service request arrives the oldest access service request must always be rejected.

The overload level of the central unit 1 can be monitored in the method of the invention by calculating the relative proportion of rejected access service requests to all access service requests at certain intervals. On the basis of this information, one can transmit for instance to a neighboring telephone exchange a message of a low or high overload of the telephone exchange in question, if necessary.

Also the central unit 1 may have a buffer line 11 in accordance with Figures 2 and 3, wherein the service requests still await service. The buffer 11 preferably does not utilize any rejection mechanism.

The service requested by means of a service request may consist of several subservices carried out by different units. For instance, the first subservice of the access service of a call attempt may take place in the signalling unit, and the subsequent subservices successively in an appropriate manner both in centralized units and in the respective signalling unit. However, service rendered on the outgoing side (B-side) of the telephone exchange seen from the point of view of the call attempt is not included in the access service.

The accompanying figures and the description pertaining thereto are intended only to illustrate the present invention. The method and distributed system of the invention may vary in their details within the scope of the appended claims.

The features disclosed in the foregoing description, in the following claims and/or in the accompanying drawings may, both separately and in any combination thereof, be material for realising the invention in diverse forms thereof.

## Claims

1. A method of processing access service requests in data processing systems, such as telephone exchanges, in which method only a limited number of access service requests are allowed for access service simultaneously, and the remaining access service requests are placed in incoming order into an access queue to wait for service, **characterized** in that when a new access service request arrives in the access queue, one or more access service requests which have waited the longest time in the access queue are rejected, if their estimated total queueing and processing times assessed according to the calculated average processing time of access service requests exceed a predetermined limit value.

2. A method as claimed in claim 1, **characterized** in that the processing time of the access service is measured for each access service request from the start of the processing of said access service request to the completion of the processing, and that said average processing time of access service requests is calculated from the processing times recorded for the successive access services.

3. A method as claimed in claim 1 or 2, **characterized** in that a queueing time in the access queue is measured for each access service request starting from the arrival of the access service request in the access queue.

4. A communication apparatus comprising a plurality of distributed peripheral processing units (2, 3, 4) and at least one central processing unit (1) serving them in common, each peripheral processing unit (2, 3, 4) comprising an access service request buffer (21, 31, 41) for storage of service requests (RQ1-RQN) intended for the central processing unit and awaiting transfer to the central processing unit, characterised in that each peripheral processing unit is arranged, when a new service request arrives, to place the new service request in the access service request buffer (21, 31, 41) and to reject from the buffer one or more access service requests which have waited longest in the buffer, if the sum of the elapsed queuing time and the estimated processing time assessed according to the calculated average processing time of access service requests exceeds a predetermined limit value.

5. Apparatus as claimed in claim 4, characterised in that the peripheral processing unit (2, 3, 4) comprises calculating means for calculating the average processing time of access service requests, said processing time being the time from the transfer of the access service request from the access buffer for processing in the central processing unit to the completion of the processing in the processing unit, and means for recording the queuing time for each access service request.

6. Apparatus as claimed in claim 4 or 5, characterised in that the peripheral process unit has a state automaton in access wait mode for each access service request in the access buffer.

7. Apparatus as claimed in claim 6 which is a digital telephone exchange.

8. Apparatus as claimed in claim 7, characterised in that the access service request is a call attempt to the telephone exchange.

## Patentansprüche

1. Verfahren zur Verarbeitung von Zugriffsanforderungen in Datenverarbeitungssystemen, wie z.B. Telefonvermittlungsstellen, wobei in dem Verfahren nur eine begrenzte Anzahl von Zugriffsanforderungen für einen Zugriff gleichzeitig erlaubt sind und die verbleibenden Zugriffsanforderungen in einer ankommenden Reihenfolge in einer Zugriffswarteschleife abgelegt werden,
dadurch gekennzeichnet,
daß dann, wenn eine neue Zugriffsanforderung in der Zugriffswarteschleife eintrifft, eine oder mehrere Zugriffsanforderungen, welche am längsten in der Zugriffswarteschleife gewartet haben, zurückgewiesen werden, falls ihre abgeschätzten Gesamt-Warte- und Verarbeitungszeiten, veranschlagt gemäß der berechneten durchschnittlichen Verarbeitungszeit von Zugriffsanforderungen, einen vorbestimmten Grenzwert überschreiten.

2. Verfahren nach Anspruch 1,
dadurch gekennzeichnet,
daß die Verarbeitungszeit eines Zugriffs für jede Zugriffsanforderung von dem Beginn der Verarbeitung der Zugriffsanforderung bis zu der Beendigung der Verarbeitung gemessen wird,
und daß die durchschnittliche Verarbeitungszeit der Zugriffsanforderungen aus den Verarbeitungszeiten berechnet wird, die für aufeinanderfolgende Zugriffe aufgezeichnet worden sind.

3. Verfahren nach Anspruch 1 oder 2,
dadurch gekennzeichnet,
daß eine Wartezeit in der Zugriffswarteschleife für jede Zugriffsanforderung gemessen wird, die bei dem Eintreffen der Zugriffsanforderung in der Zugriffswarteschleife beginnt.

4. Kommunikationsvorrichtung mit einer Vielzahl von verteilten peripheren Verarbeitungseinheiten (2, 3, 4) und mit wenigstens einer zentralen Verarbeitungseinheit (1), die diese gemeinsam bedient, wobei jede periphere Verarbeitungseinheit (2, 3, 4) einen Zugriffsanforderungs-Pufferspeicher (21, 31, 41) zur Abspeicherung von Zugriffsanforderungen (RQ1 - RQN) aufweist, die für die zentrale Verarbeitungseinheit (1) vorgesehen sind und die auf eine Übertragung zu der zentralen Verarbeitungseinheit (1) warten,
dadurch gekennzeichnet,
daß jede periphere Verarbeitungseinheit so ausgebildet ist, daß sie bei einem Eintreffen einer neuen Zugriffsanforderung diese im Zugriffsanforderungs-Pufferspeicher (21, 31, 41) ablegt und aus dem Zugriffsanforderungs-Pufferspeicher eine oder mehrere Zugriffsanforderungen zurückweist, welche am längsten im Pufferspeicher gewartet haben, falls die Summe der verstrichenen Wartezeit und einer abgeschätzten Verarbeitungszeit, veranschlagt gemäß der berechneten durchschnittlichen Verarbeitungszeit der Zugriffsanforderungen, einen vorbestimmten Grenzwert überschreitet.

5. Vorrichtung nach Anspruch 4,
dadurch gekennzeichnet,
daß die periphere Verarbeitungseinheit (2, 3, 4) folgendes aufweist:
eine Recheneinrichtung zur Berechnung der durchschnittlichen Verarbeitungszeit der Zugriffsanforderungen, wobei diese Verarbeitungszeit die Zeit von der Übertragung der Zugriffsanforderung von dem Zugriffsanforderungs-Pufferspeicher zur Verarbeitung zu der zentralen Verarbeitungseinheit bis zu der Beendigung der Verarbeitung in der Verarbeitungseinheit ist,
und eine Einrichtungen zur Aufzeichnung der Wartezeit für jede Zugriffsanforderung.

6. Vorrichtung nach Anspruch 4 oder 5,
dadurch gekennzeichnet,
daß die periphere Verarbeitungseinheit einen Zustands automaten in einem Zugriffswartemodus für jede Zugriffsanforderung in dem Zugriffsanforderungs-Pufferspeicher aufweist.

7. Vorrichtung nach Anspruch 6,
die eine digitale Telefonvermittlungsstelle bildet.

8. Vorrichtung nach Anspruch 7,
dadurch gekennzeichnet,
daß die Zugriffsanforderung einen Anruf-Versuch an die Telefonvermittlungsstelle darstellt.

## Revendications

1. Procédé de traitement des requêtes de service d'accès dans des systèmes de traitement de données tels que des centraux téléphoniques, procédé dans lequel seul un nombre limité de requêtes de service d'accès est autorisé pour accéder simultanément au service, et les requêtes de service restantes sont placées dans l'ordre d'arrivée dans une file d'attente d'accès en attendant être traitées,
caractérisé en ce que, lorsqu'une nouvelle requête de service d'accès arrive dans la file d'attente d'accès, une ou plusieurs requêtes de service d'accès ayant passé le plus de temps dans la file d'accès sont rejetées lorsque leur temps global estimé d'attente et de traitement, établi selon le calcul de la moyenne de temps de traitement des requêtes de service d'accès, dépasse une valeur limite prédéterminée.

2. Procédé selon la revendication 1,
caractérisé en ce que le temps de traitement du service d'accès est mesuré pour chaque requête de service d'accès à partir du début du traitement de ladite requête de service d'accès jusqu'à la fin du traitement, et que le temps moyen de traitement des requêtes de service d'accès est calculé à partir des temps de traitement enregistrés pour des services d'accès successifs.

3. Procédé selon la revendication 1 ou 2,
caractérisé en ce que le temps d'attente dans la file d'accès est mesuré pour chaque requête de service d'accès en partant de l'arrivée de la requête de service d'accès dans la file d'accès.

4. Appareil de communication comprenant une pluralité d'unités de traitement périphériques distribuées (2, 3, 4), et au moins une unité de traitement centrale (1) qui les sert en commun, chaque unité de traitement périphérique (2, 3, 4) comprenant une mémoire-tampon (21, 31, 41) pour les requêtes de service d'accès pour stocker les requêtes de service (RQ1 - RQN) destinées à l'unité de traitement centrale en attendant leur transfert vers celle-ci,
caractérisé en ce que chaque unité de traitement périphérique est agencée pour placer une nouvelle requête de service lorsqu'elle arrive, dans la mémoire-tampon (21, 31, 41) de requêtes de service d'accès et pour supprimer de celle-ci au moins la requête de service d'accès qui a passé le plus de temps dans la mémoire tampon, si la somme du temps d'attente écoulé et du temps de traitement estimé, établi selon le calcul du temps de traitement moyen des requêtes de service d'accès, dépasse une valeur limite prédéterminée.

5. Appareil selon la revendication 4,
caractérisé en ce que l'unité de traitement périphérique (2, 3, 4) comprend des moyens de calcul pour calculer le temps de traitement moyen des requêtes service d'accès, ledit temps de traitement étant le temps à partir du transfert de la requête de service d'accès hors de la mémoire d'accès en vue de son traitement dans l'unité centrale de traitement jusqu'à la fin du traitement effectué par l'unité centrale de traitement, ainsi que des moyens d'enregistrement du temps d'attente de chaque requête de service d'accès.

6. Appareil selon la revendication 4 ou 5,
caractérisé en ce que l'unité de traitement périphérique comprend un automatisme d'état en mode d'attente d'accès pour chaque requête de service d'accès stocké dans la mémoire tampon d'accès.

7. Appareil selon la revendication 6, qui est un central téléphonique numérique.

8. Appareil selon la revendication 7,
caractérisé en ce que la requête de service d'accès est une tentative d'appel arrivant au central téléphonique.
